# EUROPEAN PATENT APPLICATION

(11) **EP 4 835 768 A1**
(43) Date of publication of application: **04.11.2026**
(21) Application number: 25174073.4
(22) Date of filing: 02.05.2025
(51) Int. Cl.: G06Q 10/087, A62C 3/00, G08B 17/12

(54) **A DETECTOR**

(71) Applicant: AutoStore Technology AS, 5578 Nedre Vats (NO)
(72) Inventor: Myrmo, Øystein, 5578 Nedre Vats (NO); Ivarjord, Åsmund, 5578 Nedre Vats (NO)
(74) Representative: Kilburn & Strode LLP

(57) **Abstract**

The disclosure relates to a method of determining fire suppression in an automated storage and retrieval system comprising providing a first camera having a first field of view, the first field of view covering a portion of the storage and retrieval system, providing a second camera having a second field of view, the second field of view at least partially covering the portion of the storage and retrieval system, the second field of view being different from the first field of view, receiving first image data from the first camera and second image data from the second camera, determining a first area within the first field of view having a first probability of fire being present, determining a second area within the second field of view having a second probability of fire being present, combining the first area and the second area to determine a first volume having a third probability of fire being present.

## Description

### TECHNICAL FIELD

The disclosure relates to a detector. More particularly, it relates to a detector and methods for detecting and determining a location of a fire in an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Fire in a grid-based storage and retrieval system is important to mitigate because without direct access to locations within the grid, a user may find it difficult to determine the source of a fire. There are systems that allow for fire suppression to be delivered in localised positions, and even within the grid. Such systems may be automatically triggered, or they may be controlled by the system to deliver fire suppressant in a particular position. However, it may be difficult to determine where is best to deliver the fire suppressant, or if a passive fire suppressant device has activated, it can be difficult to determine where this occurred in the grid.

One way of monitoring the grid to look for the telltale signs of fire, or that a fire suppressant device has activated is to use a thermal camera (forward looking infrared) or indeed an optical camera (visible light). Due to the nature of the signs of fire, it can be difficult to pin point a location of the fire. For example, smoke may obscure the view of a camera observing the grid; or radiated heat may show up around the source of the fire making it difficult to find the actual source within the heat. Stereoscopic measurement presents a potential option to identify a better 3D location of the source of a fire. However, stereoscopic measurement relies on the ability to match surface features present in two views from two different cameras. Smoke, heat, and fire suppressant (particulate matter) are difficult if not impossible to measure stereoscopically because they can generate light, have little to no surface texture for mapping, and can be translucent or transparent. What is needed is methods or sensors which can operate to provide better measurements of the location of a fire, and improve the targeted suppression in an automated storage and retrieval system.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows an automated storage system including cameras;
Fig. 6a shows a first view of the automated storage system of Fig. 5;
Fig 6b shows a second view of the automated storage system of Fig. 5;
Fig. 7 shows an overlay of the first and second views on a representation of the automated storage system;
Fig. 8 shows a calculated location of fire generated on the representation of Fig. 7;
Fig. 9a shows a first view of the automated storage system of Fig. 5;
Fig. 9b shows a second view of the automated storage system of Fig. 5;
Fig. 10 shows a calculated location of fire generated on a representation of the automated storage system;
Fig. 11 shows an example of a targeted delivery fire suppression container.

### DETAILED DESCRIPTION

In overview, the disclosure relates to providing a first camera having a first field of view, the first field of view covering a portion of the storage and retrieval system, providing a second camera having a second field of view, the second field of view at least partially covering the portion of the storage and retrieval system, the second field of view being different from the first field of view. When the image data is received from each of the first camera and the second camera, determination of where the fire is likely to be is done on each of those 2D images. It is only after the determination is done, that the data derived from the images is combined to provide a volumetric or 3D location in the grid. Stereoscopic measurement is typically done by matching surfaces features in each of the raw images, rather than taking direct measurements from each of the two images and combining those measurements in the 3D representation. The present method thereby allows for precise 3D measurements to be made without requiring matching of features between the first image and the second image. Feature mapping being difficult if not impossible for transparent, translucent, light-generating, or otherwise feature-devoid objects.

### Automated storage and retrieval system overview

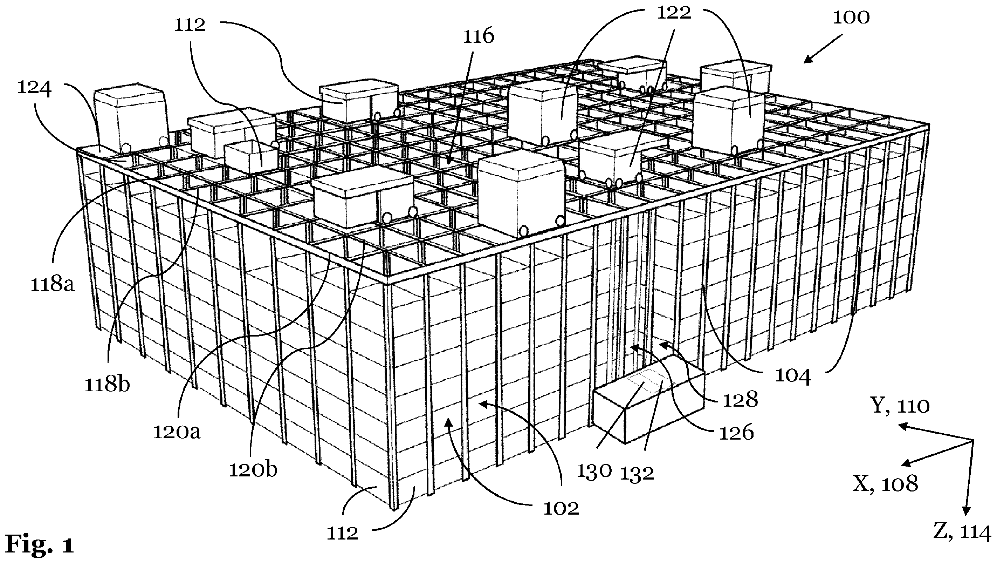

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

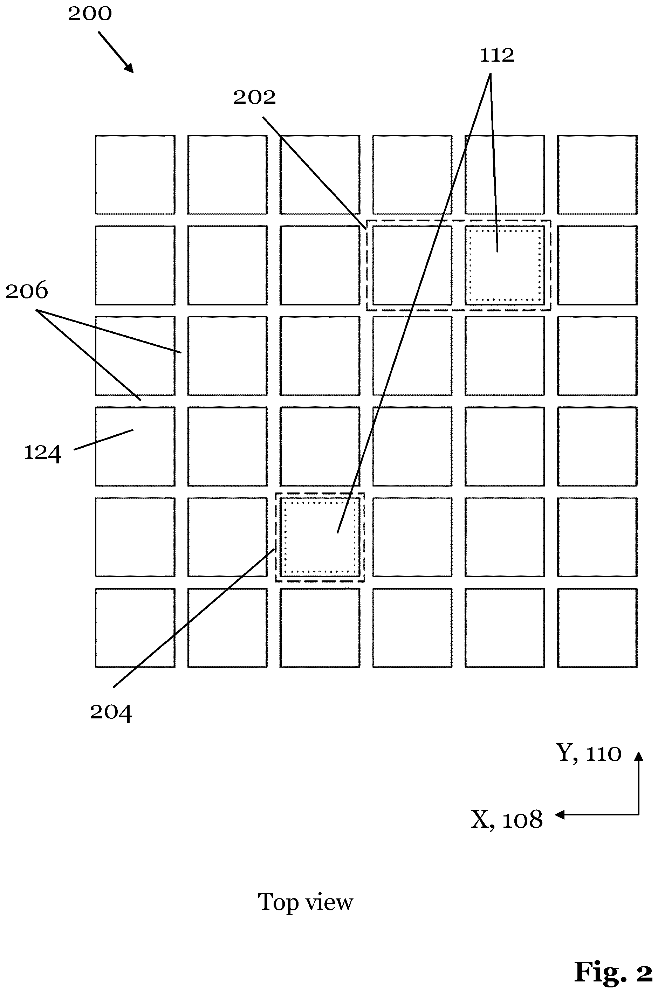

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

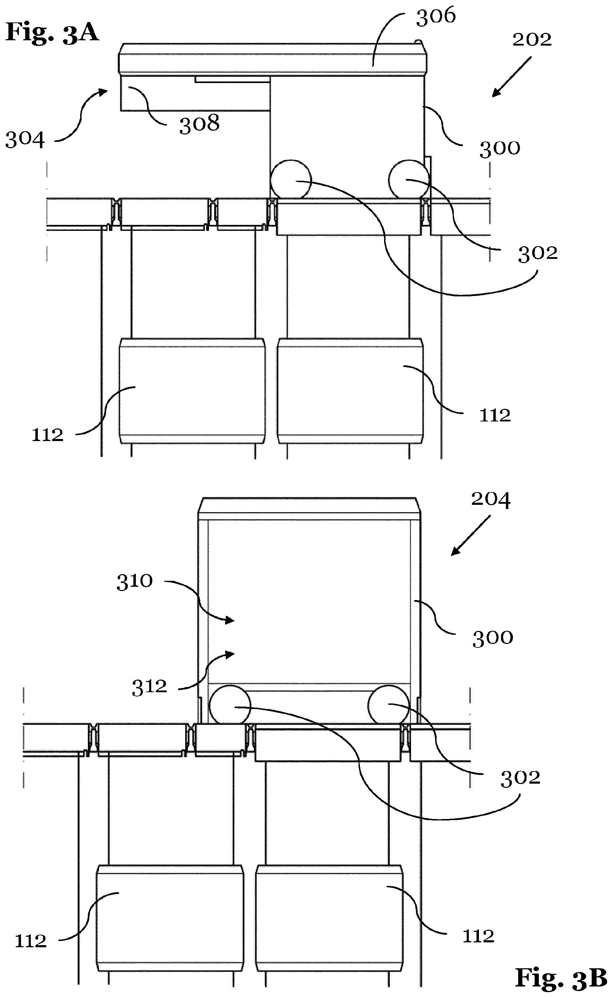

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

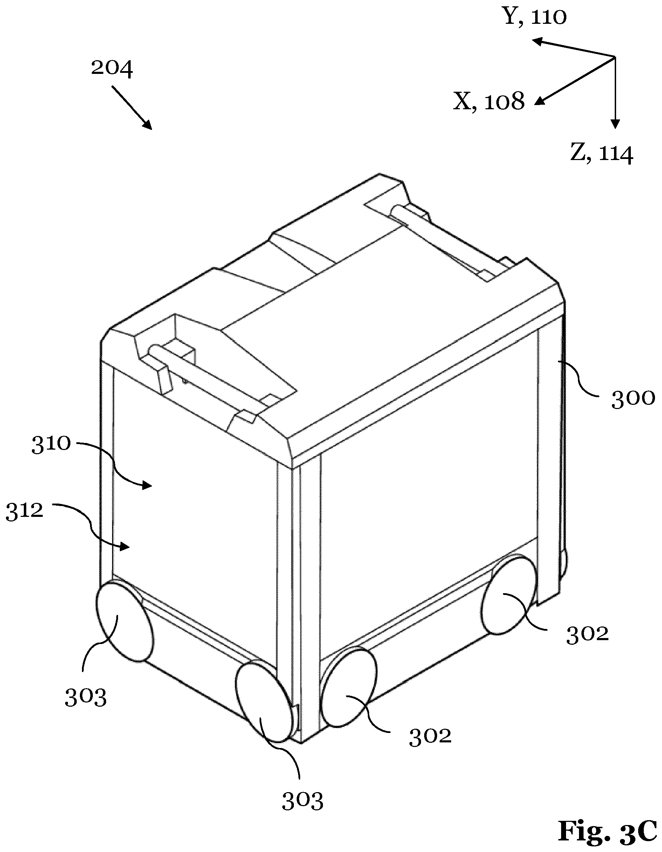

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

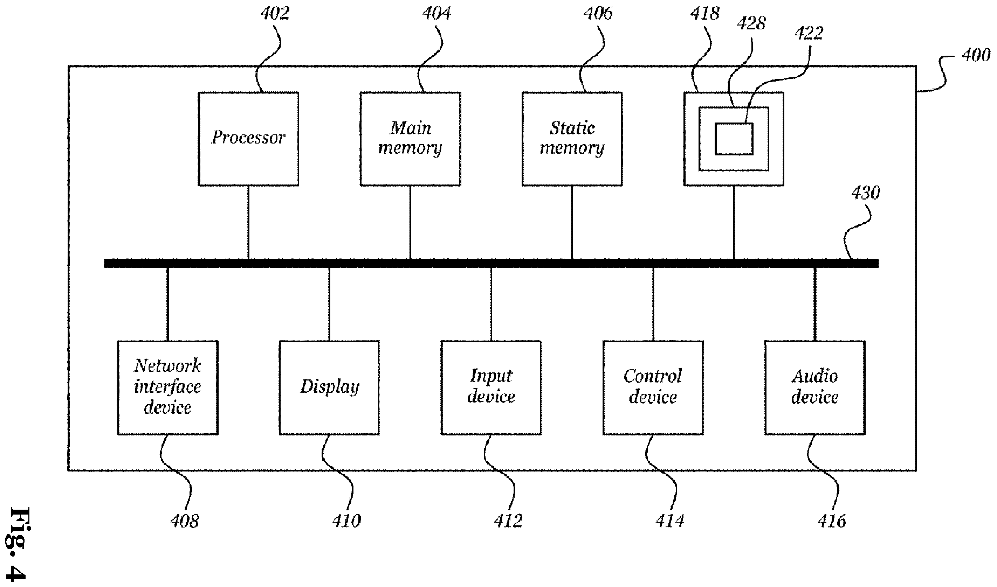

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

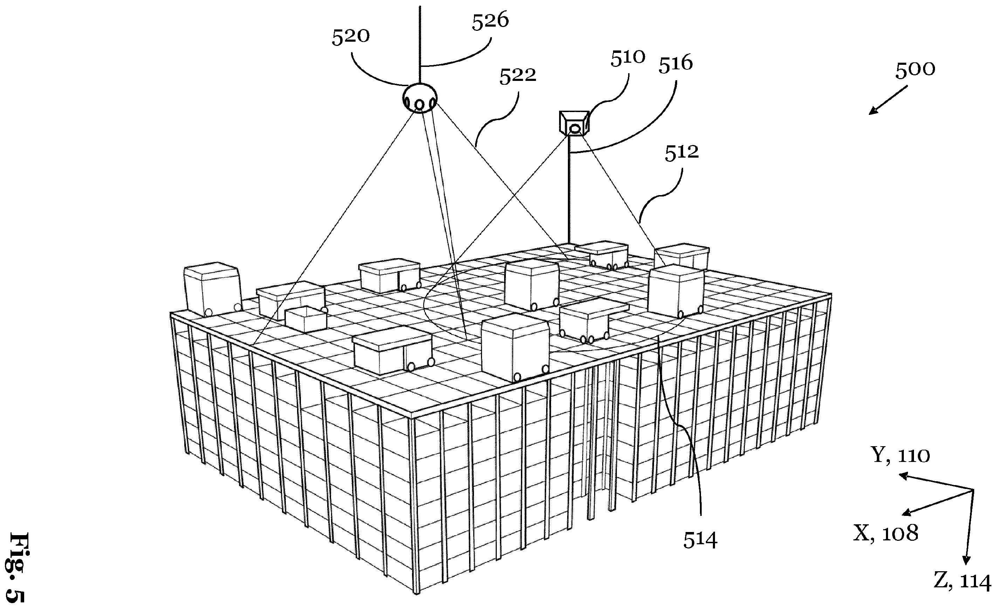

Referring to the embodiment shown in Fig. 5, a grid 500 according to an embodiment is shown. The grid 500 comprises a frame formed by a plurality of generally rectilinear, adjacent vertical columns, a rail system formed on top of the grid 500, and a plurality of robots configured to lift and lower bins 112 from/into the columns. The grid 500 further comprises a first camera 510 which has a first field of view 512 which covers a portion 514 of the grid 500. The first camera 510 is shown mounted on a vertical support 516 at the edge of the grid 500. However, first camera 510 can be mounted in any suitable manner, above the grid 500, to the side of the grid 500, or indeed any other location having a view of at least a portion of the grid 500. As another example, second camera 520 is mounted above the grid 500, supported from above by a hanging support 526. Second camera 520 is shown as being a 360 degree camera having a combined field of view that extends all around the camera 520. However, second camera 520 may be a single view camera as shown for the first camera 510. Second camera 520 has a second field of view 522. The second field of view 522 is different from the first field of view 512. The second field of view 522 also covers the same portion 514 of the grid 500 that the first field of view 512 covers. However, the second field of view 522 provides a different viewing angle of the portion 514 of the grid 500 than the first field of view 512 provides. In this way, the first field of view 512 and the second field of view 522 can be combined to provide a stereoscopic view of the grid 500.

Stereoscopic measurement of a scene requires capturing two different images from two different fields of view. In order to calculate depth, or out-of-plane measurements of parts of the scene, corresponding features in the two different images must be matched together. The relative position of features in common between the two different images within each field of view can be combined to provide an estimate for the depth of the feature in the scene. However, the reliable matching of features from a scene in each of the two views assumes that the feature shown in each view of the scene is the same. Such an assumption is appropriate in a situation where surface clarity is sufficient (e.g. the features are reliably present on the surface of the object in the scene). Difficulty may arise in situations where an object is transparent, translucent, or is emitting light throughout a volume. In those situations, the presence of features may be dependent on path tracing through the volume of the object. The appearance, not just the translation, of features appearing on the surface of a transparent or translucent object may be dependent on the angle that the object is viewed from. Smoke, flames, infrared emissions, or clouds of fire suppressant may cause such difficulties when stereoscopic measurements are made.

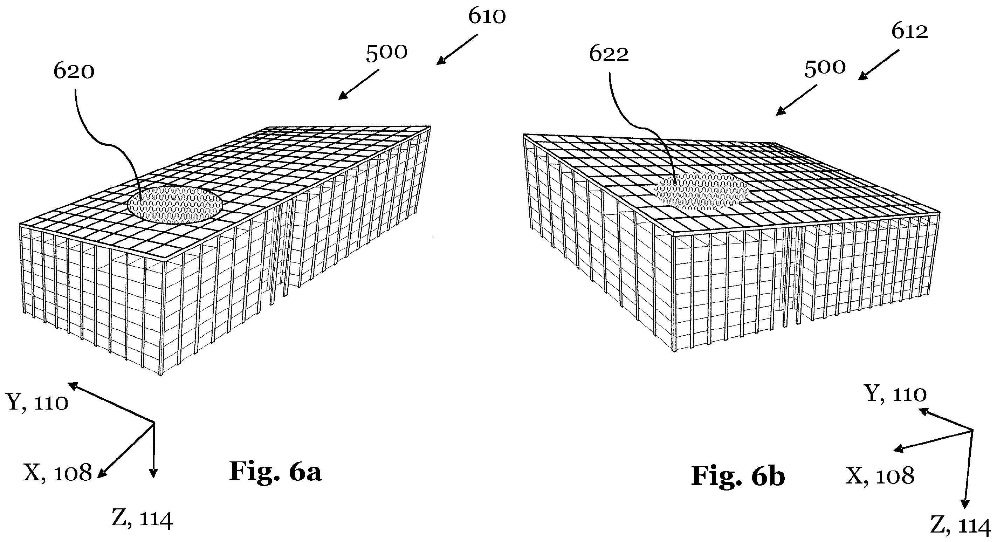

Turning to Figs. 6a and 6b, a first image 610 and a second image 612 are shown. The first image 610 may be obtained by the first camera 510, and the second image 612 may be obtained by the second camera 520. Since the field of view of the first camera 510 and the second camera 520 are different, the first image 610 and the second image 612 provide different views of the same scene. In this case, the scene shown in each of the first image 610 and the second image 612 is a grid of an automated storage and retrieval system, such as grid 100 or grid 500. Fig. 6a and Fig. 6b each show X, Y, and Z directions corresponding to the X, Y, and Z directions shown in Figs. 1 and 5. It will be appreciated that the angle and perspective of X, Y, and Z directions is different in each of the first image 610 and the second image 612 due to the different fields of view.

In addition to the grid 500, the first image 610 shows a first area 620. The first area 620 may correspond to indicators of fire in the image 610. For example, where the first camera 510 is a heat sensing camera, or a forward looking infrared camera, the first area 620 may be a portion of the first image 610 corresponding to a high temperature, or a high level of emitted infrared radiation. The second image 612 shows a second area 622 in addition to the grid 500. The second area 622 may correspond to indicators of fire in the image 620. For example, where the second camera 520 is a heat sensing camera, or a forward looking infrared camera, the second area 622 may be a portion of the second image 612 corresponding to a high temperature, or a high level of emitted infrared radiation.

At this point, it may be possible to present the stereoscopic image pair 610, 612 to two eyes of a viewer to recreate a 3D viewing effect. However, the present method relates to stereoscopic measurement.

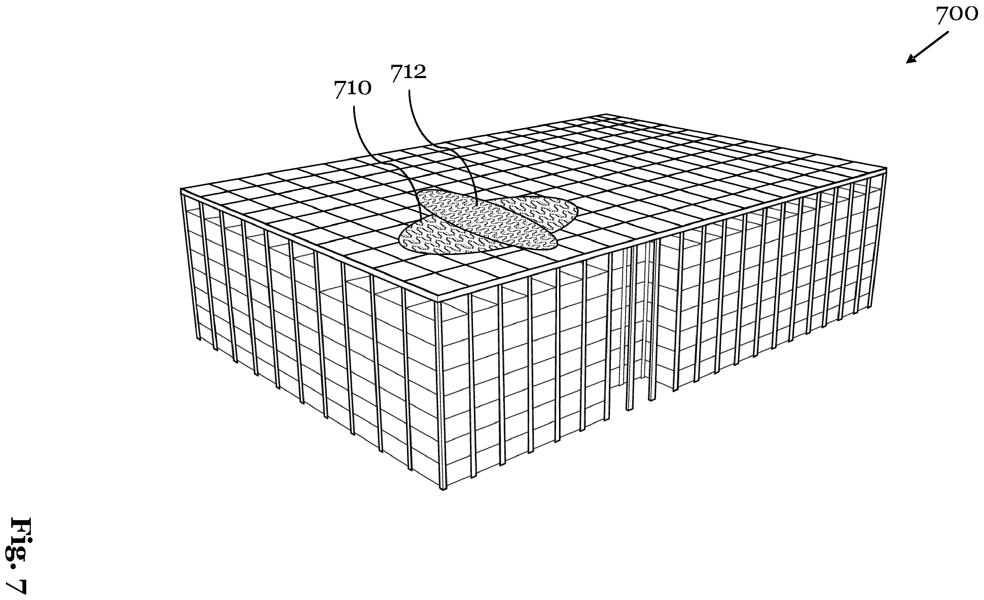

The first image 610 and the second image 612 may be received by a processor for processing. Fig. 7 shows a virtual representation 700 of the grid 500 which is imaged in Fig. 6a and 6b. The method includes determining a first area 710 within the first field of view 512 which has a first probability of fire being present. The method also includes determining a second area 712 within the second field of view 522 which has a second probability of fire being present. The first area 710 of the virtual representation 700 may correspond to the first imaged area 620. The first area 710 of the virtual representation 700 may be determined by a threshold or an edge detection algorithm. For example, the first area 710 may be determined based on a threshold value such as infrared radiation corresponding to a temperature greater than a threshold. The threshold temperature may be 50 degrees Celsius, 70 degrees Celsius, 100 degrees Celsius, or 150 degrees Celsius. In another example, an edge detection algorithm may be used to determine the first area 710. Using an edge detection algorithm, sharp or discontinuous local changes in temperature may provide an indication of a high probability of fire. For example, a sharp increase by 50 degrees Celsius in the vicinity of a single cell of the grid 500 may indicate a high probability of fire at that cell.

The second area 712 of the virtual representation 700 may correspond to the second imaged area 622. The second area 712 of the virtual representation 700 may be determined by a threshold or an edge detection algorithm. For example, the second area 712 may be determined based on a threshold value such as infrared radiation corresponding to a temperature greater than a threshold. The threshold temperature may be 50 degrees Celsius, 70 degrees Celsius, 100 degrees Celsius, or 150 degrees Celsius. In another example, an edge detection algorithm may be used to determine the second area 712. Using an edge detection algorithm, sharp or discontinuous local changes in temperature may provide an indication of a high probability of fire. For example, a sharp increase by 50 degrees Celsius in the vicinity of a single cell of the grid 500 may indicate a high probability of fire at that cell.

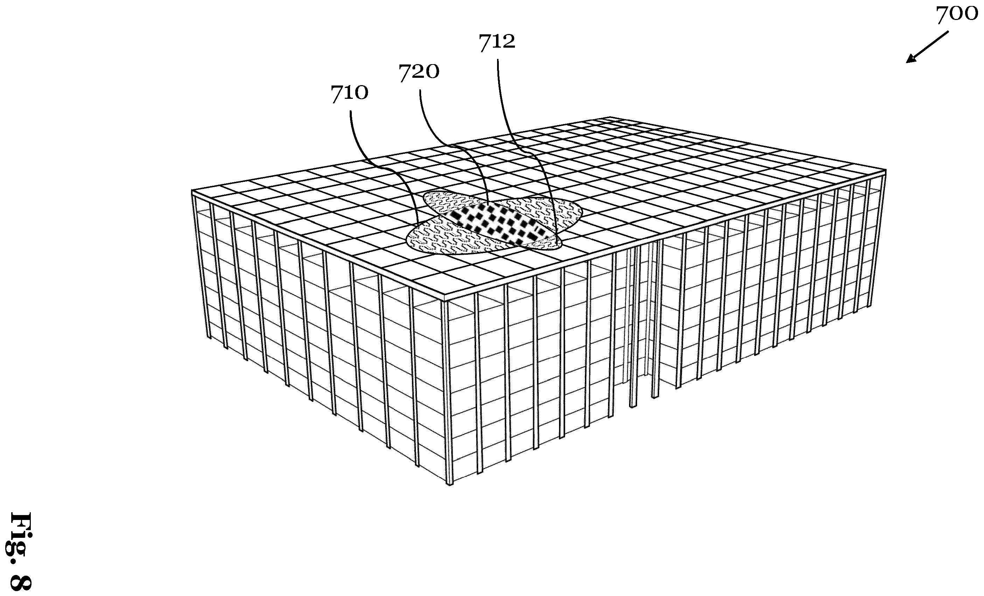

Once the first area 710 and the second area 712 have been determined, the first area 710 and the second area 712 are combined in order to determine a first volume 720 of the representation 700 of the grid 500. As shown in Fig. 8, the first volume 720 may be formed from a simple intersection of the first area 710 and the second area 712. That is, the first volume 720 may be determined as a set of voxels within the representation 700 of the grid 500 in which both the first area 710 and the second area 712 intersect. It will be appreciated that each of the first area 710 and the second area 712 may include a degree of uncertainty due to being able to accurately determine the likely source of the fire from a single 2D image. By combining both the first area 710 and the second area 712 in this way, it is possible to narrow the highest likelihood of fire to the first volume 720.

In some instances, the origin of a fire may be located below the top surface of the grid 500, for example at the bottom or in the middle of the grid 500. The first volume 720 may be extrapolated vertically downwards in the grid 500 to identify that voxels below the top surface of the grid may represent the source of the fire.

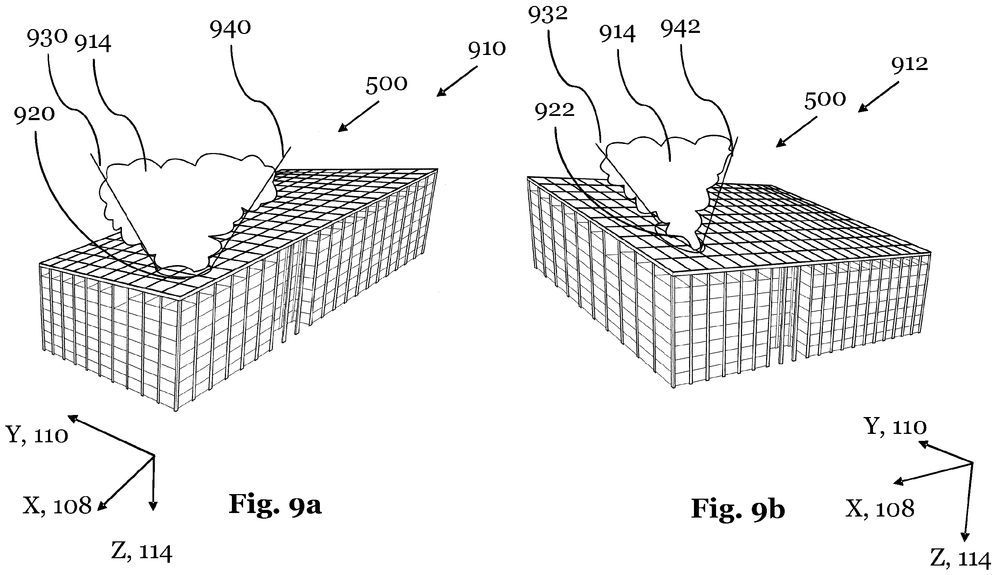

In another example shown in Figs. 9a and 9b, a first image 910 and a second image 912 are shown. The first image 910 may be obtained by the first camera 510, and the second image 912 may be obtained by the second camera 520. Since the field of view of the first camera 510 and the second camera 520 are different, the first image 910 and the second image 912 provide different views of the same scene. In this case, the scene shown in each of the first image 910 and the second image 912 is a grid of an automated storage and retrieval system, such as grid 100 or grid 500. Fig. 9a and Fig. 9b each show X, Y, and Z directions corresponding to the X, Y, and Z directions shown in Figs. 1 and 5. It will be appreciated that the angle and perspective of X, Y, and Z directions is different in each of the first image 910 and the second image 912 due to the different fields of view. In addition to the grid 500, the first image 910 and the second image 912 show smoke 914 or clouds of particulate matter emanating from the grid 500. Since the first image 910 and the second image 912 are taken from different fields of view, the bounds of the smoke appear differently in the first image 910 and the second image 912. Billowing clouds of smoke 914 also present potential difficulty in stereoscopic measurement because of the lack of consistent surface features that can be mapped between the views. It will be appreciated that from the first image 910, a left side and a right side of the smoke 914 can be seen more readily than say, the depth of the smoke 914 relative to the first camera 510. From the second image 912 a different left side and right side of the smoke 914 can be seen. Again, the depth of the smoke 914 relative to the second camera 520 cannot be so readily determined.

The first image 910 and the second image 912 may be received by a processor for processing. The method includes determining a first area 920 within the first field of view 512 which has a first probability of fire being present. The method also includes determining a second area 922 within the second field of view 522 which has a second probability of fire being present. The first area 920 may be determined based on detecting a first edge 930 of the smoke 914 and a second edge 940 of the smoke 914 in the first image 910. The second area 922 may be determined based on detecting a first edge 932 of the smoke 914 and a second edge 942 of the smoke 914 in the second image 912. The first area 920 and the second area 922 may be determined by extrapolating the first 930, 932 and second 940, 942 edges to within the grid 500. The first 930, 932 and second 940, 942 edges may be straight line edges, or they may be curved or non-straight line edges.

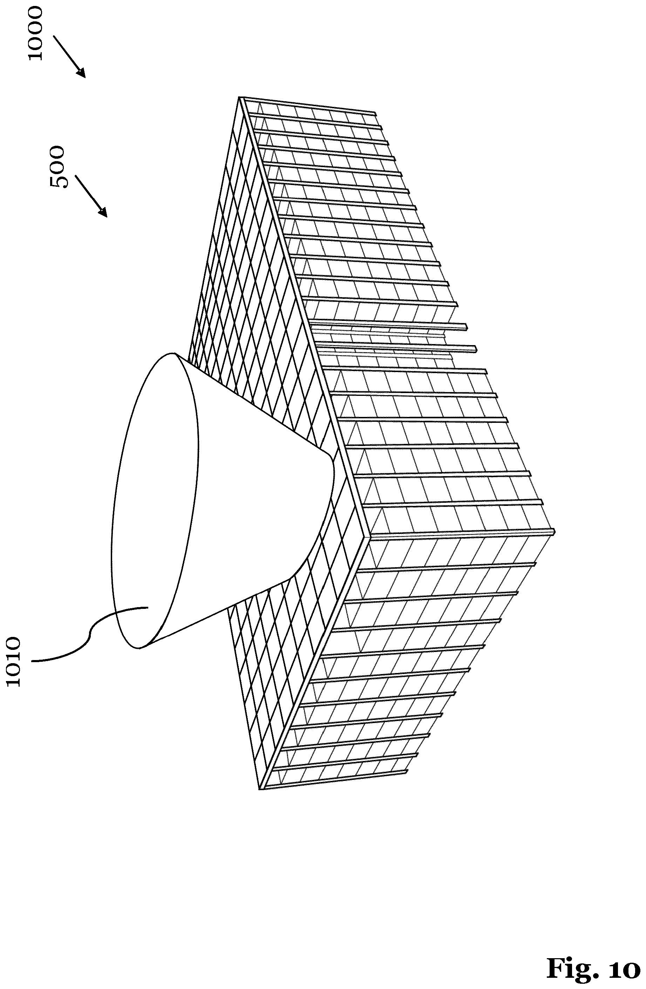

Fig. 10 shows a virtual representation 1000 of the grid 500 in which the first area 920 and the second area 922 have been combined to determine a first volume 1010 having a third probability of fire being present. In the example shown in Fig. 10, the first area 920 and the second area 922 have been combined by producing a vertical revolution of each of the first area 920 and the second area 922 and determining the first volume 1010 as the volume of overlap between the first area 920 and the second area 922. However, the first area 920 and the second area 922 may be combined to determine the first volume 1010 in various ways, for example fitting the first area 920 and the second area 922 to a volumetric model of the smoke 914 by interpolating between the first area 920 and the second area 922.

The first volume 1010 may extend through the grid 500 to determine the likely location of the source of the smoke 914 or particulate matter. For example, a revolved cone may be extrapolated into the grid 500, or the first volume may be extended vertically downward into the grid 500.

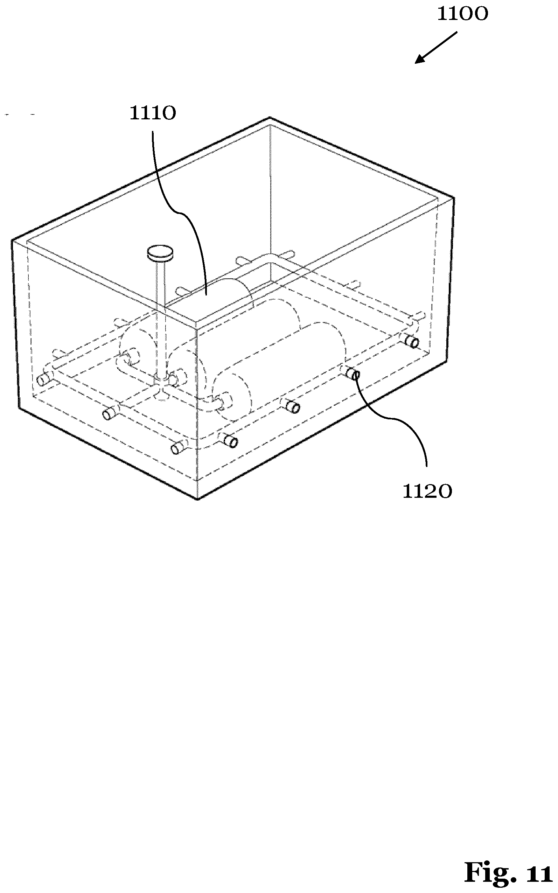

The smoke 914 or particulate matter detected may be smoke produced by a fire, or it may be the result of the particulate matter ejected by a fire suppressing device. For example, as shown in Fig. 11, a fire suppressing container 1100 is shown. The fire suppressing container 1100 may include a fire suppressant 1110 configured to be ejected through one or more nozzles 1120 of the container 1100. Fire suppressing containers 1100 may be distributed around or within the grid 500, and may be configured to operate automatically in response to local detection of fire. For example, a fire suppressing container 110 may detect smoke or heat locally, and automatically distribute fire suppressant 1110 from the nozzles 1120. The present method may detect smoke 914 from a fire, or the particulate matter being detected may be the fire suppressant 1110 emanating from the grid 500.

Smoke 914 or particulate matter may be observed using a heat camera, a forward looking infrared camera, or an optical camera (i.e. a camera operating in the visible light spectrum). Where the particulate matter is fire suppressant 1110, the fire suppressant may be chosen so as to have a high level of contrast for the cameras being used to detect the fire. For example, a white, a red, an orange, or a green fire suppressant may be chosen such that the fire suppressant is readily observed by the cameras.

It will be appreciated that in determining a probability of fire, image data may be considered to provide relative indications of heat, or smoke, or particulate matter. For example, there may be some probability of fire where a temperature of 50 degrees Celsius is detected, but there may be an even higher probability of fire where a temperature of 60 degrees Celsius is detected. Since measurements of image data provide typically continuous data, an area within a field of view having a high probability of fire being present may be considered relative to a background probability of fire being present within the image data.

When there is no fire present, it will be appreciated that the first camera and the second camera will still produce images, and those images may include variations in the data. In order to prevent day to day measurements where there is no fire present from providing a local determination of fire, a threshold probability may be used to determine if the local probability of fire is sufficiently high so as to take remedial action. For example, where there is no temperature above 50 degrees Celsius, no temperature above 40 degrees Celsius, or indeed any other suitable threshold, it may be determined that the probability of fire is negligible or zero.

Once a likely location for the fire has been determined, a user may be directed to the fire to manually extinguish. Alternatively or additionally, the grid 500 may include one or more fire suppressing devices, such as local sprinkler systems, or fire suppressing containers 1100. The local fire suppressing devices may be activated to target the fire at the source without causing damage the remainder of containers in the grid. In this way, the fire may be suppressed in a local area and goods located in other containers need not be covered in fire suppressant. Fire suppression may even be delivered to the location of the fire directly by a container handling vehicle operating on the grid 500. For example, a fire suppressing container 1100 may be delivered to a vicinity of the determined location of the fire responsive to determining the likely location of the fire.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A method of determining fire suppression in an automated storage and retrieval system comprising:
providing a first camera having a first field of view, the first field of view covering a portion of the storage and retrieval system,
providing a second camera having a second field of view, the second field of view at least partially covering the portion of the storage and retrieval system, the second field of view being different from the first field of view,
receiving first image data from the first camera and second image data from the second camera,
determining a first area within the first field of view having a first probability of fire being present,
determining a second area within the second field of view having a second probability of fire being present,
combining the first area and the second area to determine a first volume having a third probability of fire being present.

2. The method of claim 1, further comprising determining a third area within the first field of view having a fourth probability of fire being present, wherein the fourth probability is lower than the first probability, and determining a fourth area within the second field of view having a fifth probability of fire being present, wherein the fifth probability is lower than the second probability.

3. The method of claim 1 or claim 2, wherein determining the first area comprises determining a first edge of one or more of heat, flames, smoke, or fire suppressant using an edge detection algorithm, and defining the first area as the portion of the storage and retrieval system bounded by the first edge.

4. The method of claim 3, wherein determining the second area comprises determining a second edge of one or more of heat, flames, smoke, or fire suppressant using an edge detection algorithm, and defining the second area as the portion of the storage and retrieval system bounded by the second edge.

5. The method of any preceding claim, wherein combining the first area and the second area to determine a first volume comprises fitting the first area to a 3D representation of the automated storage and retrieval system and fitting the second area to the 3D representation of the automated storage and retrieval system.

6. The method of claim 5, wherein combining the first area and the second area comprises summing the first probability and the second probability over the first volume.

7. The method of any preceding claim wherein the first camera and the second camera are heat cameras, forward looking infrared cameras, or optical cameras.

8. The method of any preceding claim further comprising causing a fire suppression system to direct fire suppression in the location of the first volume.

9. The method of any of claims 1 to 7, wherein the first camera and the second camera are configured to detect fire suppressant, and optionally wherein the fire suppressant is coloured to provide contrast detectable by the first camera and the second camera.

10. A system for determining fire suppression in an automated storage and retrieval system comprising:
a first camera having a first field of view, the first field of view covering a portion of the storage and retrieval system,
a second camera having a second field of view, the second field of view at least partially covering the portion of the storage and retrieval system, the second field of view being different from the first field of view, and
a processing system, the processing system configured to perform the method according to any of claims 1 to 9.

11. The system according to claim 10, further comprising one or more fire suppression systems configurable to deliver fire suppression to a target volume, wherein the system is configured to deliver fire suppression to the first volume.

12. The system according to claim 11, wherein the system is configured to not deliver fire suppression outside of the first volume.

13. The system according to claim 11 or claim 12, wherein the one or more fire suppression systems comprises a robot configured to move around the automated storage and retrieval system, and to deliver fire suppression at a given location.

14. A computer-readable medium comprising instructions which, when executed by a processor of an automated storage and retrieval system, cause the automated storage and retrieval system to perform the method according to any of claims 1 to 9.
